(19) **Europäisches Patentamt / European Patent Office / Office européen des brevets**

(11) **EP 2 371 908 A2**

(12) **EUROPEAN PATENT APPLICATION**
published in accordance with Art. 153(4) EPC

(43) Date of publication:
05.10.2011 Bulletin 2011/40

(51) Int Cl.:
*C09C 1/36* (2006.01)   *C09C 3/00* (2006.01)
*B82B 3/00* (2006.01)

(21) Application number: 09819341.0

(22) Date of filing: 23.09.2009

(86) International application number:
**PCT/KR2009/005401**

(87) International publication number:
**WO 2010/041834 (15.04.2010 Gazette 2010/15)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: 10.10.2008  KR 20080099690

(71) Applicant: **Korea Advanced Institute of Science and Technology**
**Daejeon 305-701 (KR)**

(72) Inventors:
• **YANG, Seung-Man**
  **Daejeon 305-701 (KR)**

• **KIM, Shin-Hyun**
  **Daejeon 305-701 (KR)**
• **SHIM, Jae Won**
  **Daejeon 305-701 (KR)**
• **YI, Gi-Ra**
  **Seoul 136-075 (KR)**

(74) Representative: **Widén, Björn**
**BRANN AB**
**P.O. Box 12246**
**102 26 Stockholm (SE)**

(54) **PIGMENT CONSISTING OF PHOTONIC CRYSTALS FOR A PAINT COMPOSITION, AND METHOD FOR PRODUCING SAME**

(57) The present invention relates to a pigment for a paint composition consisted of photonic crystals. More particularly, the present invention is directed to a pigment for a paint composition consisting of a photonic crystal which is a polymeric material in which colloidal particles are dispersed, and a method for preparing the same.

Figure 1.

## Description

### Technical Field

The present invention relates to a pigment for a paint composition consisted of photonic crystals. More particularly, the present invention is directed to a pigment for a paint composition consisting of a photonic crystal which is a polymeric material in which colloidal particles are dispersed, and a method for preparing the same.

### Background Art

A photonic crystal is a material that has a band gap due to periodical change of its dielectric constant at a level of a half wavelength of light. Photons which have an energy corresponding to the band gap cannot propagate into a photonic crystal due to very low state density of the photonic crystal, and these result in reflection color.

Reflection color due to periodic arrangement of colloidal particles, which may be understood by the same principle, corresponds to the band gap. Reflection color of a colloidal photonic crystal is determined by refractive indices of the colloid and surrounding material, crystal structure, particle size, distance between particles, etc. Therefore, photonic crystals which have a desired reflection color may be prepared by controlling these factors.

Film-type photonic crystals are mainly formed by a vertical coating method and a spin coating method. The vertical coating method (P. Jiang, J. F. Bertone, K. S. Hwang, and V. L. Colvin, "Single-Crystal Colloidal Multilayers of Controlled Thickness", Chemistry of Materials, 11, 2132-2140 (1999)) allows for preparing a thick film with high reflectivity. However, the film produced by the vertical coating method is very fragile due to its weak mechanical strength. The vertical coating method employs an evaporation process and, thus, it takes for a long time to produce films by this method. Moreover, the vertical coating method has a disadvantage that colloidal crystals prepared by this method have internal cracks and, thus, it is difficult to put these crystals to practical use.

By the spin coating method (Journal of American Chemical Society, 126, 13778-13786 (2006); U.S. Patent Application Publication No. 2005/0095471), crystals are produced very quickly. By this method, however, it is difficult to produce thick crystals with high reflectivity. It is also difficult, by the spin coating method, to control lattice constant of crystals and, thus, particles with the same size cannot show various reflected colors. Moreover, since crystals produced by this method are large, they cannot be used to coat other materials.

In the meantime, the method for producing spheroidal photonic crystals by evaporating liquid droplets containing colloidal particles of re-dispersibly small photonic crystals (Journal of the American Chemical Society, 128, 10897-10904 (2006); Korean Patent No. 10-0717923 (2007)), and the method for producing spheroidal photonic crystals by using liquid droplets containing photo-polymerizable colloids (Advanced Materials, 20, 1649-1655 (2008)) are disclosed. However, these methods have a disadvantage that the photonic crystals produces by these methods do not have sufficient reflectivities due to their low crystallinity which result from many defects present within the spheroidal space.

Besides, various methods for producing colloidal photonic crystal films or fine photonic crystals are reported. However, it is difficult to commercialize these methods since most of these methods employs complicated and complex processes or the photonic crystals produced by these methods show low mechanical strengths.

### Technical Problem

The primary object of the present invention is to provide a pigment for a paint composition consisting of a photonic crystal which is a polymeric material in which colloidal particles are dispersed.

Another object of the present invention is to provide a method for preparing a pigment for a paint composition, which comprises photo-curing a photo-curable colloidal dispersion prepared by dispersing colloidal particles in a photo-curable dispersion medium, to obtain a photonic crystal film.

Yet another object of the present invention is to provide a pigment for a paint composition consisting of a porous polymeric photonic crystal in which pores are dispersed.

Still another object of the present invention is to provide a method for preparing a pigment for a paint composition, which comprises photo-curing a photo-curable colloidal dispersion prepared by dispersing colloidal particles in a photo-curable dispersion medium, to obtain photonic crystal flakes.

Further object of the present invention is to provide a method for preparing a paint composition, which comprises: i) photo-curing a photo-curable colloidal dispersion prepared by dispersing colloidal particles in a photo-curable dispersion medium, to obtain a photonic crystal film; ii) grinding the photonic crystal film to obtain photonic crystal flakes; and iii) dispersing the photonic crystal flakes into a solvent.

Still further object of the present invention is to provide a method for preparing a paint composition, which comprises: i) photo-curing a photo-curable colloidal dispersion prepared by dispersing colloidal particles in a photo-curable dispersion medium, to obtain photonic crystal flakes; and ii) dispersing the photonic crystal flakes into a solvent.

**Technical Solution**

The aforementioned primary object of the present invention can be achieved by providing a pigment for a paint composition consisting of a photonic crystal which is a polymeric material in which colloidal particles are dispersed.

The colloidal particles which are included into the pigment for a paint composition of the present invention, are preferably selected from silica, titanium dioxide, polystyrene or poly(methyl methacrylate). In addition, the colloidal particles have a size of perferably 50 nm to 100,000 nm, and more preferably 100 nm to 3,000 nm. Moreover, the colloidal particles may be a hollow type or a core-shell type.

The volumetric fraction of colloidal particles which are dispersed into the polymeric material is preferably 5% (v/v) to 70% (v/v), and more preferably 10% (v/v) to 40% (v/v).

The polymeric material into which the colloidal particles are dispersed, of the present invention, is a material that spontaneously forms crystals when the colloidal particles are being dispersed and photo-cured, such as a photo-cured polymer. Preferably, the polymeric material may be a photo-cured polymer which comprises an acrylate group.

The photonic crystal of the present invention may further comprises at least one selected from fluorescent substance, quantum dot, carbon black or titanium dioxide. In addition, the shape of the photonic crystal is preferably flake and, preferably, the flake has a size of 15 $\mu$m to 1 cm and a thickness of 5 $\mu$m to 500 $\mu$m.

The position of the reflected wavelength of the colloidal photonic crystals prepared by the present invention may be estimated by the following (Equation 1):

$$\lambda = 2dn_{eff} = \left(\frac{\pi}{3\sqrt{2}v_p}\right)^{\frac{1}{3}}\left(\frac{8}{3}\right)^{\frac{1}{2}}D\left(n_p{}^2 v_p + n_m{}^2\left(1 - v_p\right)\right)^{\frac{1}{2}} \quad \cdots\cdots \text{(Equation 1)}$$

where n is refractive index of a material, $v_p$ is a volumetric fraction of colloidal particles, and D is a diameter of the colloidal particle.

Another object of the present invention can be achieved by providing a method for preparing a pigment for a paint composition, which comprises photo-curing a photo-curable colloidal dispersion prepared by dispersing colloidal particles in a photo-curable dispersion medium, to obtain a photonic crystal film.

The colloidal particles which are used for the method for preparing a pigment for a paint composition of the present invention, are preferably selected from silica, titanium dioxide, polystyrene or poly(methyl methacrylate). In addition, the colloidal particles have a size of perferably 50 nm to 100,000 nm, and more preferably 100 nm to 3,000 nm. Moreover, the colloidal particles may be a hollow type or a core-shell type.

The photo-curable colloidal dispersion may be photo-cured by irradiating UV of about 40 mW/cm² for 0.01 sec to 10 sec. In order to photo-cure the photo-curable colloidal dispersion completely, the intensity or duration of irradiation of UV may be changed appropriately. At this time, the wavelength of UV being irradiated may be the same as the absorption wavelength of a photo-initiator. Typically, a wide wavelength band of UV originated from mercury arc lamp may be used.

The photo-curable dispersion medium comprises preferably 5% (v/v) to 70% (v/v), and more preferably 10% (v/v) to 40% (v/v) of the colloidal particles.

The photo-curable dispersion medium is preferably a monomer comprising an acrylate group, such as ETPTA (ethoxylated trimethylolpropane triacrylate monomer). In addition, a material which is photo-curable with UV irradiation and can spontaneously form a crystal and be photo-curable with UV irradiation when colloidal particles are dispersed therewithin, may be used without limitation.

The photo-curable colloidal dispersion may further comprise at least one selected from fluorescent substance, quantum dot, carbon black or titanium dioxide.

Preferably, the photonic crystal film prepared by the present invention has a thickness of 5 $\mu$m to 500 $\mu$m.

Specific embodiments of the method for preparing a photonic crystal film of the present invention are, but not limited to, as follows:

Firstly, the photonic crystal film may be produced by injecting the photo-curable colloidal dispersion between two parallel plates which are at intervals of 5 $\mu$m to 500 $\mu$m, and photo-curing the photo-curable dispersion medium. In this case, the introduction rate of the photo-curable colloidal dispersion may be increased by reducing pressure between the two parallel plates or by pressurizing the photo-curable colloidal dispersion.

Secondly, the photonic crystal film may be produced by inserting a movable plate between two fixed parallel plates which are at intervals of 5 $\mu$m to 500 $\mu$m, extracting the movable plate, with injecting the photo-curable colloidal dispersion between the fixed plate and the movable plate, to coat the movable plate with the photo-curable colloidal dispersion, and curing the coated photo-curable colloidal dispersion.

Thirdly, the photonic crystal film may be produced by introducing the photo-curable colloidal dispersion between two rollers which are at intervals of 5 $\mu$m to 500 $\mu$m and rotates reversely from each other, and photo-curing the photo-curable colloidal dispersion at a region where a distance between the two rollers is shortest.

Fourthly, the photonic crystal film may be produced by inserting a movable plate between two rollers which are at intervals of 5 $\mu$m to 500 $\mu$m and rotates reversely from each other, extracting the movable plate, with injecting the photo-curable colloidal dispersion between the two rollers and the movable plate, to coat the movable plate with the photo-curable colloidal dispersion, and curing the coated photo-curable colloidal dispersion.

Fifthly, the photonic crystal film may be produced by introducing the photo-curable colloidal dispersion on a plate, coating the plate with the photo-curable colloidal dispersion through moving a block which has a blade or a sloped surface and is installed 5 $\mu$m to 500 $\mu$m above the plate, and photo-curing the coated photo-curable colloidal dispersion.

Sixthly, the photonic crystal film may be produced by introducing the photo-curable colloidal dispersion on a rotating roller, coating the rotating roller with the photo-curable colloidal dispersion by means of a first blade which is installed 5 $\mu$m to 500 $\mu$m above the rotating roller, photo-curing the coated photo-curable colloidal dispersion, and stripping off the photo-cured photonic crystal film from the roller.

Seventhly, the photonic crystal film may be produced by introducing the photo-curable colloidal dispersion on a plate, rotating the plate, and photo-curing the photo-curable colloidal dispersion.

According to the present invention, laminated films may be produced in order to induce reflections of various wavelength bands from one film. After preparing one-layer film by the afore-mentioned methods, two or more-layered (laminated) films may be prepared by laminating at least one photonic crystal film on the one-layer film which is used as a substrate.

In addition, laminated films may be prepared by introducing simultaneously dipersions with different reflection wavelength bands without mixing. Moreover, laminated films may be prepared by bonding two or more one-layer films with a monomer for a polymer or a bonding agent.

That is, according to the present invention, laminated (multi-layer) photonic crystal films which reflect various colors simultaneously may be prepared by laminating at least one photonic crystal film of which reflected wavelength is/are different from that of the photonic crystal film.

For the method for preparing a pigment for a paint composition of the present invention, the pigment for a paint composition may be prepared by further comprising removing the colloidal particles contained in the photonic crystal film to obtain a porous photonic crystal film. The colloidal particles may be removed by heating the photonic colloidal film up to 100 °C to 500 °C, or treating the photonic colloidal film with hydrofluoric acid or sodium hydroxide. The silica particles are removed by treating them with hydrofluoric acid or sodium hydroxide, while cross-linked polymer particles are removed by heating them at a temperature range of 100 °C to 500 °C.

Yet another object of the present invention can be achieved by providing a pigment for a paint composition consisting of a porous polymeric photonic crystal in which pores are dispersed.

The pores which are included into the pigment for a paint composition consisting of a porous polymeric photonic crystal of the present invention have a size of preferably 50 nm to 100,000 nm, and more preferably 100 nm to 3,000 nm.

The volumetric fraction of the pores which are dispersed into the polymeric photonic crystal is preferably 5% (v/v) to 70% (v/v), and more preferably 10% (v/v) to 40% (v/v) of the colloidal particles.

The polymeric photonic crystal into which pores are dispersed may be preferably a photo-curable polymer comprising an acrylate group.

The porous polymeric photonic crystal of the present invention may further comprise at least one selected from fluorescent substance, quantum dot, carbon black or titanium dioxide. In addition, the polymeric photonic crystal is preferably flake, and the flake preferably has a size of 15 $\mu$m to 1 cm and a thickness of 5 $\mu$m to 500 $\mu$m.

Still another object of the present invention can be achieved by providing a method for preparing a pigment for a paint composition, which comprises photo-curing a photo-curable colloidal dispersion prepared by dispersing colloidal particles in a photo-curable dispersion medium, to obtain photonic crystal flakes.

The colloidal particles which are used for the method for preparing a pigment for a paint composition of the present invention, are preferably selected from silica, titanium dioxide, polystyrene or poly(methyl methacrylate). In addition, the colloidal particles have a size of perferably 50 nm to 100,000 nm, and more preferably 100 nm to 3,000 nm. Moreover, the colloidal particles may be a hollow type or a core-shell type.

The photo-curable colloidal dispersion may be photo-cured by irradiating UV of about 40 mW/cm$^2$ for 0.01 sec to 10 sec. In order to photo-cure the photo-curable colloidal dispersion completely, the intensity or duration of irradiation of UV may be changed appropriately. At this time, the wavelength of UV being irradiated may be the same as the absorption wavelength of a photo-initiator. Typically, a wide wavelength band of UV originated from mercury arc lamp may be used.

The photo-curable dispersion medium comprises preferably 5% (v/v) to 70% (v/v), and more preferably 10% (v/v) to 40% (v/v) of the colloidal particles.

The photo-curable dispersion medium is preferably a monomer comprising an acrylate group, such as ETPTA (ethoxylated trimethylolpropane triacrylate monomer). In addition, a material which is photo-curable with UV irradiation and can spontaneously form a crystal and be photo-curable with UV irradiation when colloidal particles are dispersed therewithin, may be used without limitation.

The photo-curable colloidal dispersion may further comprise at least one selected from fluorescent substance, quantum dot, carbon black or titanium dioxide.

Preferably, the photonic crystal flake prepared by the present invention has a thickness of 5 $\mu$m to 500 $\mu$m and a size of 15 $\mu$m to 1 cm.

Specific embodiments of the method for preparing a photonic crystal flake without grinding procedure, of the present invention are, but not limited to, as follows:

Firstly, the photonic crystal flakes may be produced by photo-curing, by means of a photomask, a specific portion of the photo-curable dispersion medium, with injecting the photo-curable colloidal dispersion between two parallel plates which are at intervals of 5 $\mu$m to 500 $\mu$m.

Secondly, the photonic crystal flakes may be produced by repeatedly photo-curing, by means of a photomask, a specific portion of the photo-curable dispersion medium, after injecting the photo-curable colloidal dispersion between two parallel plates which are at intervals of 5 $\mu$m to 500 $\mu$m.

Thirdly, the photonic crystal flakes may be produced by photo-curing, by means of a photomask, a specific portion of the photo-curable dispersion medium, with injecting the photo-curable colloidal dispersion through a microtube with a height of 5 $\mu$m to 500 $\mu$m.

Fourthly, the photonic crystal flakes may be produced by photo-curing, by means of a photomask, a specific portion of the photo-curable dispersion medium, after injecting the photo-curable colloidal dispersion through a microtube with a height of 5 $\mu$m to 500 $\mu$m.

Fifthly, the photonic crystal flakes may be produced by injecting the photo-curable colloidal dispersion into grooves formed on a substrate and having a depth of 5 $\mu$m to 500 $\mu$m, and photo-curing the photo-curable colloidal suspension.

Sixthly, the photonic crystal flakes may be produced by injecting the photo-curable colloidal dispersion between two parallel plates which are at intervals of 5 $\mu$m to 500 $\mu$m, and photo-curing, by means of a photomask, the photo-curable dispersion medium.

Seventhly, the photonic crystal flakes may be produced by applying the photo-curable dispersion medium to a plate, and photo-curing, by means of a photomask, the photo-curable dispersion medium.

Eighthly, the photonic crystal flakes may be produced by introducing the photo-curable dispersion medium as a droplet on a first plate by means of a inkjet printer or a dispenser, installing a second plate such that a distance between the first plate and the second plate is to be 5 $\mu$m to 500 $\mu$m, and photo-curing the photo-curable dispersion medium.

For the method for preparing a pigment for a paint composition of the present invention, the pigment for a paint composition may be prepared by further comprising removing the colloidal particles contained in the photonic crystal flake to obtain a porous photonic crystal flake. The colloidal particles may be removed from the photonic crystal flakes by heating the photonic colloidal flake up to 100 °C to 500 °C, or treating the photonic colloidal flake with hydrofluoric acid or sodium hydroxide. The silica particles are removed by treating them with hydrofluoric acid or sodium hydroxide, while cross-linked polymer particles are removed by heating them at a temperature range of 100 °C to 500 °C.

Further object of the present invention can be achieved by providing a method for preparing a paint composition, which comprises: i) photo-curing a photo-curable colloidal dispersion prepared by dispersing colloidal particles in a photo-curable dispersion medium, to obtain a photonic crystal film; ii) grinding the photonic crystal film to obtain photonic crystal flakes; and iii) dispersing the photonic crystal flakes into a solvent.

The colloidal particles which are used at the step i) of the method for preparing a pigment for a paint composition of the present invention, are preferably selected from silica, titanium dioxide, polystyrene or poly(methyl methacrylate). In addition, the colloidal particles have a size of perferably 50 nm to 100,000 nm, and more preferably 100 nm to 3,000 nm. Moreover, the colloidal particles may be a hollow type or a core-shell type.

The photo-curable colloidal dispersion of the step i) may be photo-cured by irradiating UV of about 40 mW/cm$^2$ for 0.01 sec to 10 sec. In order to photo-cure the photo-curable colloidal dispersion completely, the intensity or duration of irradiation of UV may be changed appropriately. At this time, the wavelength of UV being irradiated may be the same as the absorption wavelength of a photo-initiator. Typically, a wide wavelength band of UV originated from mercury arc lamp may be used.

The photo-curable dispersion medium of the step i) comprises preferably 5% (v/v) to 70% (v/v), and more preferably 10% (v/v) to 40% (v/v) of the colloidal particles.

The photo-curable dispersion medium of the step i) is preferably a monomer comprising an acrylate group, such as ETPTA (ethoxylated trimethylolpropane triacrylate monomer). In addition, a material which is photo-curable with UV irradiation and can spontaneously form a crystal and be photo-curable with UV irradiation when colloidal particles are dispersed therewithin, may be used without limitation.

The photo-curable colloidal dispersion of the step i) may further comprise at least one selected from fluorescent substance, quantum dot, carbon black or titanium dioxide.

Preferably, the photonic crystal film of the step i) and the photonic crystal flake of the step ii) have a preferable thickness of 5 μm to 500 μm, and the photonic crystal flake of the step ii) has preferably a size of 15 μm to 1 cm.

Specific embodiments of the method for preparing a photonic crystal film of the step i) of the present invention are, but not limited to, as described above.

According to the present invention, laminated films may be produced in order to induce reflections of various wavelength bands from one film. After preparing one-layer film by the afore-mentioned methods, two or more-layered (laminated) films may be prepared by laminating at least one photonic crystal film on the one-layer film which is used as a substrate.

In addition, laminated films may be prepared by introducing simultaneously dipersions with different reflection wavelength bands without mixing. Moreover, laminated films may be prepared by bonding two or more one-layer films with a monomer for a polymer or a bonding agent.

That is, according to the present invention, laminated (multi-layer) photonic crystal films which reflect various colors simultaneously may be prepared by laminating at least one photonic crystal film of which reflected wavelength is/are different from that of the photonic crystal film.

For the method for preparing a paint composition of the present invention, the photonic crystal film may be ground, at the step ii), by a mechanical force of an apparatus such as a roll mill or by rubbing the photonic crystal film by hands.

For the paint composition prepared by the method of the present invention, the photonic crystal flakes of the step ii) is preferably dispersed into the solvent at a concentration of 1% (v/v) to 60% (v/v) at the step iii). In addition, the solvent is preferably a photo-polymerizable monomer such as ETPTA, a silicon-based organic polymer such as PDMS (polydimethylsiloxane), or a viscous solvent, such as a lacquer, which is solidified after drying.

For the method for preparing a paint composition of the present invention, the paint composition comprising the pigment composition consisting of porous photonic crystals may be prepared by further comprising removing the colloidal particles contained in the photonic crystal film of the step i) to obtain a porous photonic crystal. Similarly, the paint composition comprising the pigment composition consisting of porous photonic crystals may also be prepared by further comprising removing the colloidal particles contained in the photonic crystal flakes of the step ii) to obtain a porous photonic crystal. The colloidal particles may be removed from the photonic crystal film or the photonic crystal flake by heating the photonic colloidal film/flake up to 100 °C to 500 °C, or treating the photonic colloidal film/flake with hydrofluoric acid or sodium hydroxide. The silica particles are removed by treating them with hydrofluoric acid or sodium hydroxide, while cross-linked polymer particles are removed by heating them at a temperature range of 100 °C to 500 °C.

Still further object of the present invention can be achieved by providing a method for preparing a paint composition, which comprises: i) photo-curing a photo-curable colloidal dispersion prepared by dispersing colloidal particles in a photo-curable dispersion medium, to obtain photonic crystal flakes; and ii) dispersing the photonic crystal flakes into a solvent.

The colloidal particles which are used at the step i) of the method for preparing a pigment for a paint composition of the present invention, are preferably selected from silica, titanium dioxide, polystyrene or poly(methyl methacrylate). In addition, the colloidal particles have a size of perferably 50 nm to 100,000 nm, and more preferably 100 nm to 3,000 nm. Moreover, the colloidal particles may be a hollow type or a core-shell type.

The photo-curable colloidal dispersion of the step i) may be photo-cured by irradiating UV of about 40 mW/cm$^2$ for 0.01 sec to 10 sec. In order to photo-cure the photo-curable colloidal dispersion completely, the intensity or duration of irradiation of UV may be changed appropriately. At this time, the wavelength of UV being irradiated may be the same as the absorption wavelength of a photo-initiator. Typically, a wide wavelength band of UV originated from mercury arc lamp may be used.

The photo-curable dispersion medium of the step i) comprises preferably 5% (v/v) to 70% (v/v), and more preferably 10% (v/v) to 40% (v/v) of the colloidal particles.

The photo-curable dispersion medium of the step i) is preferably a monomer comprising an acrylate group, such as ETPTA (ethoxylated trimethylolpropane triacrylate monomer). In addition, a material which is photo-curable with UV irradiation and can spontaneously form a crystal and be photo-curable with UV irradiation when colloidal particles are dispersed therewithin, may be used without limitation.

The photo-curable colloidal dispersion of the step i) may further comprise at least one selected from fluorescent substance, quantum dot, carbon black or titanium dioxide.

Preferably, the photonic crystal flake of the step i) has preferably a thickness of 5 μm to 500 μm and a size of 15 μm to 1 cm.

Specific embodiments of the method for preparing a photonic crystal flake of the step i) without grinding procedure, of the present invention are, but not limited to, as described above.

For the paint composition prepared by the method of the present invention, the photonic crystal flakes of the step i) is preferably dispersed into the solvent at a concentration of 1% (v/v) to 60% (v/v) at the step ii). In addition, the solvent is preferably a photo-polymerizable monomer such as ETPTA, a silicon-based organic polymer such as PDMS (polydimethylsiloxane), or a viscous solvent, such as a lacquer, which is solidified after drying.

For the method for preparing a paint composition of the present invention, the paint composition comprising the pigment composition consisting of porous photonic crystals may be prepared by further comprising removing the colloidal particles contained in the photonic crystal flake of the step i) to obtain a porous photonic crystal. The colloidal particles may be removed from the photonic crystal flake by heating the photonic colloidal flake up to 100 °C to 500 °C, or treating the photonic colloidal flake with hydrofluoric acid or sodium hydroxide. The silica particles are removed by treating them with hydrofluoric acid or sodium hydroxide, while cross-linked polymer particles are removed by heating them at a temperature range of 100 °C to 500 °C.

**Advantageous Effects**

The paint composition comprising the photonic crystal flake of the present invention shows beautiful colors and metallic luster due to high refexibility of the photonic crystal flake for specific wavelength. Particularly, the photonic crystal comprising colloidal particles has a narrow width of reflection spectrum and, thus, selectively reflects a narrow band of wavelength. In contrast, the porous photonic crystal has a wide width of reflection spectrum and, thus, reflects a relatively wide band of wavelength and reflected colors are brilliant and aesthetic. Therefore, the paint composition of the present invention may be applicable to decorative special effect pigments or dyes, UV and IR protecting screen, reflective pigments (dyes) of displays, anti-counterfeiting films, etc.

Since the reflected wavelength is a function of lattice constant and effective refractive index, the reflected wavelength may be controlled by particle sizes, volumetric fractions, removal of particles, etc.

According to the photonic crystal flake and the method for preparing a photonic crystal paint composition of the present invention, colloidal particles are spontaneously oriented in a photo-polymerizable monomer solution and this mixed solution is photo-cured by UV irradiation. Therefore, production time will be enormously reduced. In addition, since the polymeric material produced by photo-curing the monomer has a high mechanical strength, it is suitable to be commercialized. Furthermore, since the photonic crystal flake has a high refexibility, it may be widely applicable.

**Brief Description of Drawings**

Fig. 1 is a schematic diagram illustrating the method for preparing a paint composition of the present invention.
Fig. 2 is an image of the photonic crystal films which reflect blue, green and red light, respectively, of Example 1.
Fig. 3 is a graph of reflected wavelengths of the photonic crystal films which reflect blue, green and red light, respectively, of Example 1.
Fig. 4 is a scanning electron microscopic image illustrating the cross-sectional view of the photonic crystal film of Example 1.
Fig. 5 is an image of the photonic crystal flakes prepared by grinding and mixing the photonic crystal films of blue, green and red colors, of Example 1.
Fig. 6 is an optical microscopic image of the photonic crystal flakes prepared by grinding and mixing the photonic crystal films of blue, green and red colors, of Example 1.
Fig. 7 is an image of a photonic crystal-coated plastic vessel which was produced by dispersing into a monomer resin the mixture prepared by grinding and mixing the photonic crystal films of blue, green and red colors, of Example 1, followed by photo-curing.
Fig. 8 is an image of the three porous photonic crystal films with different colors of Example 2.
Fig. 9 is a graph of reflected wavelengths of the three porous photonic crystal films of Example 1.
Fig. 10 is a scanning electron microscopic image illustrating the cross-sectional view of the porous photonic crystal film of Example 2.
Fig. 11 is an image of the photonic crystal flakes prepared by grinding the single colored porous photonic crystal film of Example 2.
Fig. 12 is an image of a photonic crystal-coated plastic vessel which was produced by dispersing into a monomer resin the single colored photonic crystal flakes of Example 2, followed by photo-curing.
Fig. 13 is an image of the photonic crystal flakes prepared by grinding the two porous photonic crystal films with different colors of Example 2.
Fig. 14 is an image of a photonic crystal-coated plastic vessel which was produced by dispersing into a monomer resin the two photonic crystal flakes with different colors of Example 2, followed by photo-curing.
Fig. 15 is an optical microscopic image of the mixture photonic crystal film comprising the fluorescent material prepared in Example 3.

Fig. 16 is an image of the porous photonic crystal film comprising the fluorescent material prepared in Example 3.
Fig. 17 is a graph of the reflected wavelength of the two-layered mixture photonic crystal film of Example 4.
Fig. 18 is an optical microscopic image of the two-layered mixture photonic crystal film of Example 4.

**Best Mode for Carrying Out the Invention**

Hereinafter, the present invention will be described in greater detail with reference to the following examples and drawings. The examples and drawings are given only for illustration of the present invention and not to be limiting the present invention.

Example 1. Preparation of the photonic crystal paint composition consisting of mixture photonic crystal flakes

Silica particles with uniform sizes of 145 nm, 187 nm and 199 nm, which were produced by the Stober-Fink-Bohn method, were dispersed into ETPTA by a volumetric ratio of 1:2 and 2-hydroxy-2-methyl-1-phenyl-1-propanone (Darocur 1173, Ciba Chemical) was used as a photo-initiator. The dispersion was introduced between two parallel glass plates which were at intervals of 50 $\mu$m by capillary force. Mixture photonic crystal films were prepared by photo-curing the introduced dispersions by irradiation of UV light of 40 mW/cm$^2$ from a mercury arc lamp for 10 seconds, followed by separating the photo-cured films from the glass plate.

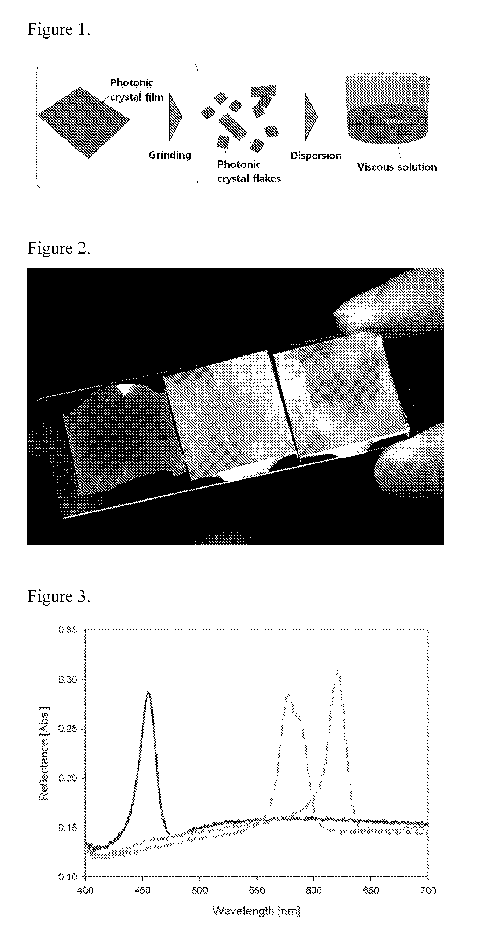

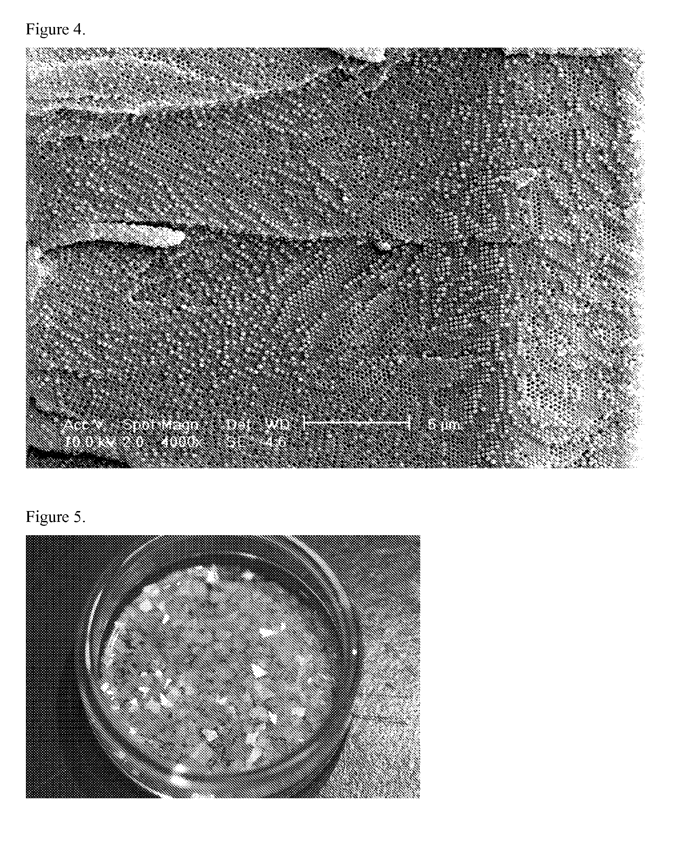

Fig. 2 shows an image of the mixture photonic crystal films which were prepared by the afore-mentioned process and have the reflected colors of blue, green and red, respectively, and Fig. 3 illustrates the spectrums of the reflected wavelengths of the respective. In addition, Fig. 4 is a scanning electron microscopic image illustrating the cross-sectional view of the mixture photonic crystal films and shows that the silica particles are periodically arranged and laminated within the film.

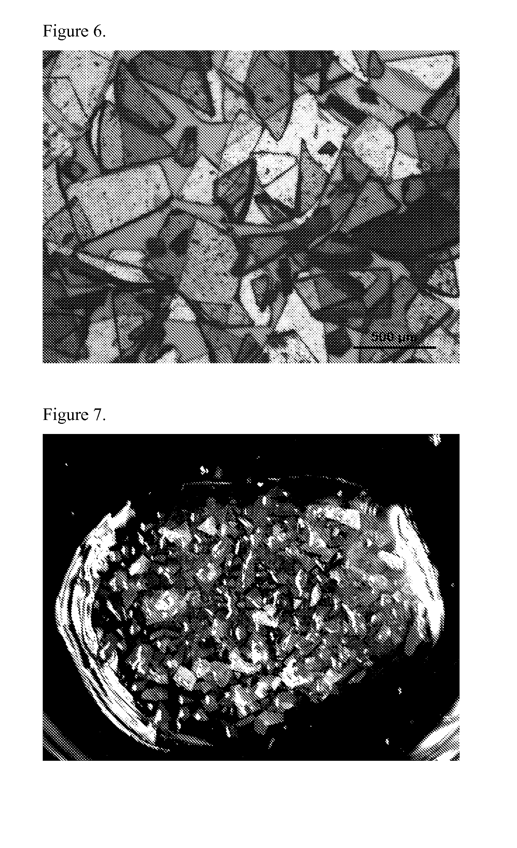

By grinding and mixing the three mixture photonic crystal films of three colors, the mixture photonic crystal flakes which reflect three different colors as shown in Fig. 5, were prepared. Fig. 6 is an optical microscopic image of the mixture of the three gound photonic crystal flakes. The ground mixture photonic crystal flakes were re-dispersed into ETPTA (Molecular weight: 428, viscosity: 70 cP, SR-454), a photo-polymerizable monomer, and the thus obtained dispersion was applied to the surface of a plastic vessel, followed by photo-polymerization thereof by irradiation of UV of 40 mW/cm$^2$ for 10 sec. As a result, we found out that the mixture can be used for a photonic crystal paint composition. Fig. 7 shows the thus prepared photonic crystal paint-coated vessel.

Example 2. Photonic crystal paint composition comprising porous photonic crystal flakes

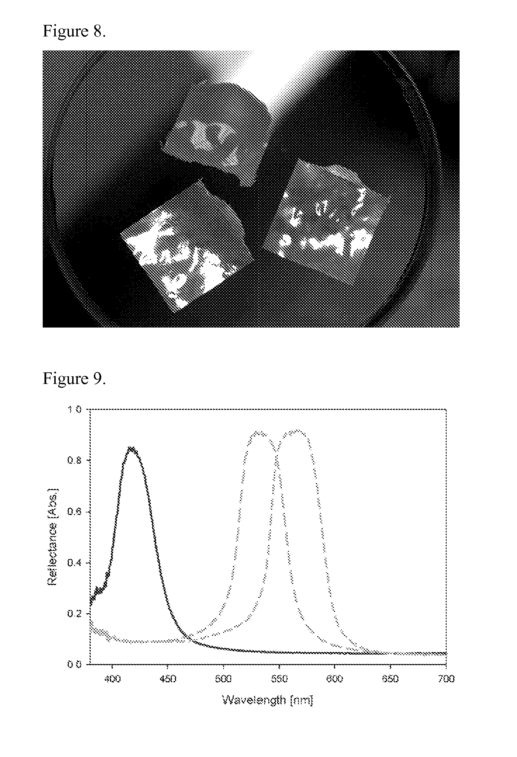

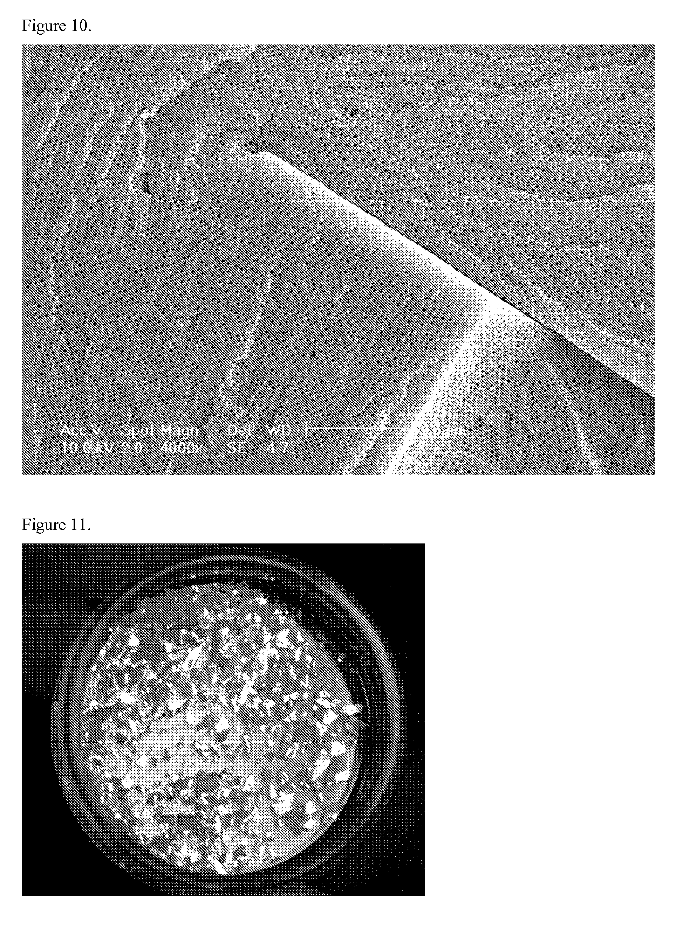

The mixture photonic crystal films prepared by the same method as Example 1 were treated with 5% hydrofluoric acid for 12 hours to remove the silica particles. Then, the films were washed with distilled water, dried, and the porous photonic crystal films were obtained. Fig. 8 illustrates the thus prepared three porous photonic crystal films with different colors. Fig. 9 shows the reflection spectrum of the respective porous photonic crystal films. The reflexibilies were about 90%. Fig. 10 shows a scanning electron microscopic image of the cross-sectional view of the porous photonic crystal film.

Porous photonic crystal flakes were prepared by grinding the film with the longest reflected wavelength out of the films. Fig. 11 shows an image of the thus obtained porous photonic crystal flakes.

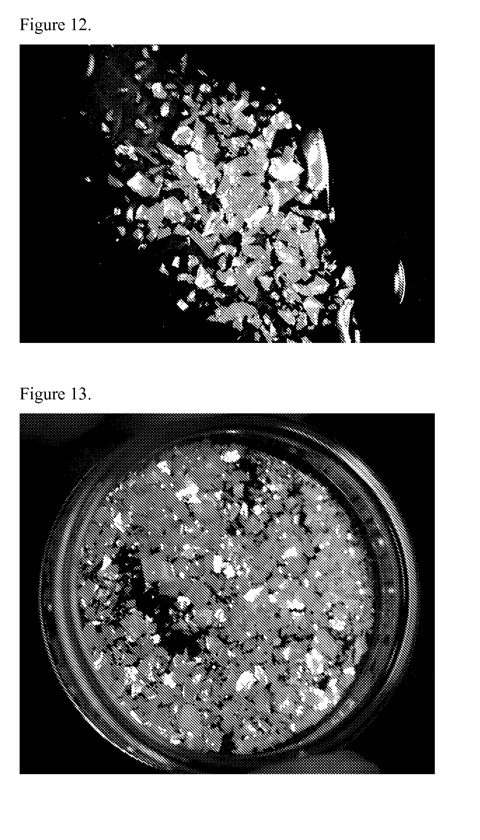

In addition, the photonic crystal flakes were dispersed into ETPTA by the same method as Example 1, and the thus obtained dispersion was applied to the surface of a plastic vessel, followed by photo-polymerization thereof. As a result, we found out that the dispersion can be used for a photonic crystal paint composition. Fig. 12 shows the thus prepared photonic crystal paint-coated vessel.

Further, two photonic crystal films with shorter reflected wavelength out of the three photonic crystal films were ground and mixed. Fig. 13 is an image of the mixed porous photonic crystal flakes. The multi-colored porous photonic crystal-coated vessel was produced by re-dispersing the mixed photonic crystal flakes into ETPTA and coating the plastic vessel with the dispersion, followed by photo-polymerizing.

Example 3. Photonic crystal film containing fluorescent material

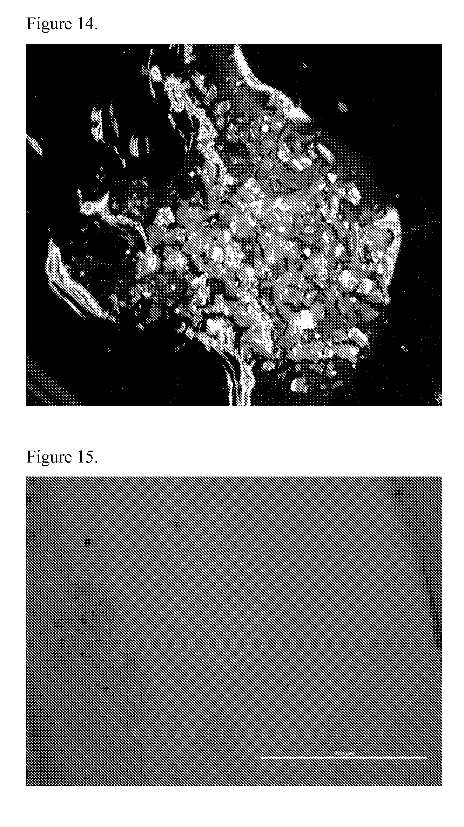

Silica particles with uniform size of 207 nm, which were produced by the Stober-Fink-Bohn method, were dispersed into ETPTA by a volumetric ratio of 3:7 and 2-hydroxy-2-methyl-1-phenyl-1-propanone (Darocur 1173, Ciba Chemical) was used as a photo-initiator. A fluorescent material, Rhodamine B iso cyanate, was added to the dispersion so as the concentration to be 5x10$^{-4}$ M. Then, the thus obtained mixture was introduced between two parallel glass plates which were at intervals of 50 $\mu$m by capillary force. A mixture photonic crystal film was prepared by photo-curing the introduced dispersions by irradiation of UV light of 40 mW/cm$^2$ from a mercury arc lamp for 10 seconds, followed by separating the photo-cured film from the glass plate. Fig. 15 is an optical microscopic image of the thus prepared mixture photonic crystal film comprising the fluorescent material.

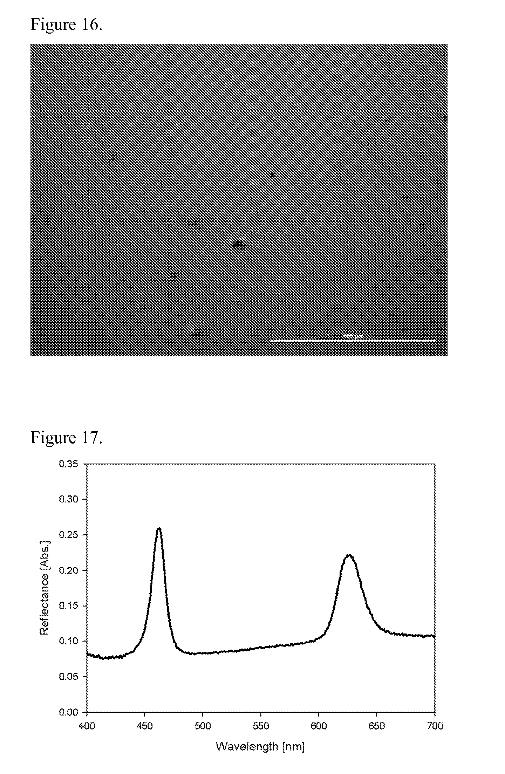

In addition, porous photonic crystal film including the fluorescent material was obtained, in the same manner as in Example 2, by selectively removing the silica particles by using hydrofluoric acid. Fig. 16 shows an optical microscopic image of the porous photonic crystal containing the fluorescent material.

Example 4. Two-layered photonic crystal or porous photonic crystal film

Silica particles with uniform size of 145 nm, which were produced by the Stober-Fink-Bohn method, were dispersed into ETPTA by a volumetric ratio of 1:2 and 2-hydroxy-2-methyl-1-phenyl-1-propanone (Darocur 1173, Ciba Chemical) was used as a photo-initiator. The dispersion was introduced between two parallel glass plates which were at intervals of 50 $\mu$m by capillary force. Mixture photonic crystal films were prepared by photo-curing the introduced dispersions by irradiation of UV light of 40 mW/cm$^2$ from a mercury arc lamp for 10 seconds, followed by separating only one glass plate.

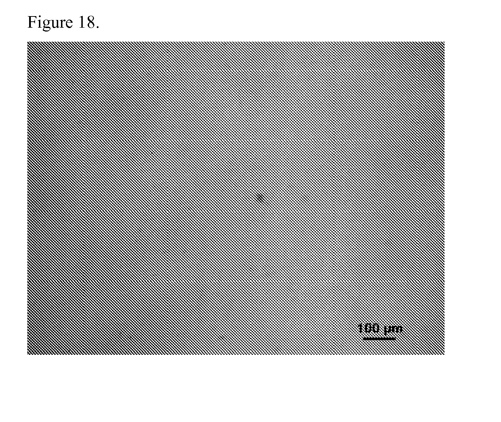

Another glass plate was introduced to the thus prepared film with intervals of 50 $\mu$m therebetween and a dispersion prepared by dispersing silica particles with uniform size of 199 nm into ETPTA (containing Darocur 1173 as a photo-initiator) with a ratio of 1:2 was introduced into the space between the film and the another glass plate, followed by irradiation of UV light of 40 mW/cm$^2$ for 10 seconds. Then, the thus prepared two layered photonic crystal film was detached from the glass plate. Fig. 17 is a graph of the reflected wavelength of the two layered photonic crystal film. Fig. 18 shows an optical microscopic image of the two layered photonic crystal film.

In addition, two layered porous photonic crystal film was obtained, in the same manner as in Example 2, by selectively removing the silica particles by using hydrofluoric acid.

**Industrial Applicability**

The paint produced by the method for preparing a photonic crystal paint composition of the present invention has a very high reflectivity and may be used to production of a vivid and brilliant coating material. In addition, the method of the present invention is suitable for mass production.

The photonic crystal paint according to the present invention may be applicable to various fields as a coating material, for example, cosmetics containers requiring high aesthetic appreciation, cellular phone cases, home appliances, ornaments, etc. In addition, when the reflected wavelength of the photonic crystal paint according to the present invention is UV or IR, it may be used for production of reflecting films against UV or IR. Moreover, the photonic crystal paint according to the present invention may be applicable to reflection pigments of displays, anti-counterfeiting films, etc., due to its high reflectivity.

**Claims**

1. A pigment for a paint composition consisting of a photonic crystal which is a polymeric material in which colloidal particles are dispersed.

2. The pigment of Claim 1, wherein said colloidal particles are selected from the group consisting of silica, titanium dioxide, polystyrene and poly(methyl methacrylate).

3. The pigment of Claim 1, wherein said colloidal particles have a size of 50 nm to 100,000 nm.

4. The pigment of Claim 1, wherein said colloidal particles have a size of 100 nm to 3,000 nm.

5. The pigment of Claim 1, wherein said colloidal particles are a hollow type or a core-shell type.

6. The pigment of Claim 1, wherein said polymeric material comprises 5% (v/v) to 70% (v/v) of said colloidal particles.

7. The pigment of Claim 1, wherein said polymeric material comprises 10% (v/v) to 40% (v/v) of said colloidal particles.

8. The pigment of Claim 1, wherein said polymeric material is photo-cured, which comprises an acrylate group.

9. The pigment of Claim 1, wherein said photonic crystal further comprises at least one selected from the group consisting of fluorescent substance, quantum dot, carbon black and titanium dioxide.

**10.** The pigment of Claim 1, wherein said photonic crystal is flake.

**11.** The pigment of Claim 10, wherein said flake has a size of 15 $\mu$m to 1 cm and a thickness of 5 $\mu$m to 500 $\mu$m.

**12.** A method for preparing a pigment for a paint composition, which comprises photo-curing a photo-curable colloidal dispersion prepared by dispersing colloidal particles in a photo-curable dispersion medium, to obtain a photonic crystal film.

**13.** The method of Claim 12, wherein said colloidal particles are selected from the group consisting of silica, titanium dioxide, polystyrene and poly(methyl methacrylate).

**14.** The method of Claim 12, wherein said colloidal particles have a size of 50 nm to 100,000 nm.

**15.** The method of Claim 12, wherein said colloidal particles have a size of 100 nm to 3,000 nm.

**16.** The method of Claim 12, wherein said colloidal particles are a hollow type or a core-shell type.

**17.** The method of Claim 12, wherein said photo-curable dispersion medium comprises 5% (v/v) to 70% (v/v) of said colloidal particles.

**18.** The method of Claim 12, wherein said photo-curable dispersion medium comprises 10% (v/v) to 40% (v/v) of said colloidal particles.

**19.** The method of Claim 12, wherein said photo-curable dispersion medium is a monomer comprising an acrylate group.

**20.** The method of Claim 12, wherein said photo-curable colloidal dispersion further comprises at least one selected from the group consisting of fluorescent substance, quantum dot, carbon black and titanium dioxide.

**21.** The method of Claim 12, wherein said photonic crystal film has a thickness of 5 $\mu$m to 500 $\mu$m.

**22.** The method of Claim 12, wherein said photonic crystal film is produced by injecting said photo-curable colloidal dispersion between two parallel plates which are at intervals of 5 $\mu$m to 500 $\mu$m, and photo-curing said photo-curable dispersion medium.

**23.** The method of Claim 22, wherein said photo-curable colloidal dispersion is introduced between said two parallel plates by reducing pressure between said two parallel plates or by pressurizing said photo-curable colloidal dispersion.

**24.** The method of Claim 12, wherein said photonic crystal film is produced by inserting a movable plate between two fixed parallel plates which are at intervals of 5 $\mu$m to 500 $\mu$m, extracting said movable plate, with injecting said photo-curable colloidal dispersion between said fixed plate and said movable plate, to coat said movable plate with said photo-curable colloidal dispersion, and curing said coated photo-curable colloidal dispersion.

**25.** The method of Claim 12, wherein said photonic crystal film is produced by introducing said photo-curable colloidal dispersion between two rollers which are at intervals of 5 $\mu$m to 500 $\mu$m, and photo-curing said photo-curable colloidal dispersion at a region where a distance between the two rollers is shortest.

**26.** The method of Claim 12, wherein said photonic crystal film is produced by inserting a movable plate between two rollers which are at intervals of 5 $\mu$m to 500 $\mu$m, extracting said movable plate, with injecting said photo-curable colloidal dispersion between said two rollers and said movable plate, to coat said movable plate with said photo-curable colloidal dispersion, and curing said coated photo-curable colloidal dispersion.

**27.** The method of Claim 12, wherein said photonic crystal film is produced by introducing said photo-curable colloidal dispersion on a plate, coating said plate with said photo-curable colloidal dispersion through moving a block which has a blade or a sloped surface and is installed 5 $\mu$m to 500 $\mu$m above said plate, and photo-curing said coated photo-curable colloidal dispersion.

**28.** The method of Claim 12, wherein said photonic crystal film is produced by introducing said photo-curable colloidal dispersion on a rotating roller, coating said rotating roller with said photo-curable colloidal dispersion by means of a first blade which is installed 5 $\mu$m to 500 $\mu$m above said rotating roller, photo-curing said coated photo-curable colloidal dispersion, and stripping off the photo-cured photonic crystal film from said roller.

29. The method of Claim 12, wherein said photonic crystal film is produced by introducing said photo-curable colloidal dispersion on a plate, rotating said plate, and photo-curing said photo-curable colloidal dispersion.

30. The method of Claim 12, further comprising laminating at least one photonic crystal film of which reflected wavelength is/are different from that of said photonic crystal film.

31. The method of Claim 12, further comprising removing said colloidal particles contained in said photonic crystal film to obtain a porous photonic crystal film.

32. The method of Claim 31, wherein said colloidal particles are removed by heating said photonic colloidal film up to 100 °C to 500 °C, or treating said photonic colloidal film with hydrofluoric acid or sodium hydroxide.

33. A pigment for a paint composition consisting of a porous polymeric photonic crystal in which pores are dispersed.

34. The pigment of Claim 33, wherein said pores have a size of 50 nm to 100,000 nm.

35. The pigment of Claim 33, wherein said pores have a size of 100 nm to 3,000 nm.

36. The pigment of Claim 33, wherein said polymeric photonic crystal comprises 5% (v/v) to 70% (v/v) of said colloidal particles.

37. The pigment of Claim 33, wherein said polymeric photonic crystal comprises 10% (v/v) to 40% (v/v) of said colloidal particles.

38. The pigment of Claim 33, wherein said polymeric photonic crystal is photo-cured, which comprises an acrylate group.

39. The pigment of Claim 33, wherein said polymeric photonic crystal further comprises at least one selected from the group consisting of fluorescent substance, quantum dot, carbon black and titanium dioxide.

40. The pigment of Claim 33, wherein said polymeric photonic crystal is flake.

41. The pigment of Claim 40, wherein said flake has a size of 15 $\mu$m to 1 cm and a thickness of 5 $\mu$m to 500 $\mu$m.

42. A method for preparing a pigment for a paint composition, which comprises photo-curing a photo-curable colloidal dispersion prepared by dispersing colloidal particles in a photo-curable dispersion medium, to obtain photonic crystal flakes.

43. The method of Claim 42, wherein said colloidal particles are selected from the group consisting of silica, titanium dioxide, polystyrene and poly(methyl methacrylate).

44. The method of Claim 42, wherein said colloidal particles have a size of 50 nm to 100,000 nm.

45. The method of Claim 42, wherein said colloidal particles have a size of 100 nm to 3,000 nm.

46. The method of Claim 42, wherein said colloidal particles are a hollow type or a core-shell type.

47. The method of Claim 42, wherein said photo-curable dispersion medium comprises 5% (v/v) to 70% (v/v) of said colloidal particles.

48. The method of Claim 42, wherein said photo-curable dispersion medium comprises 10% (v/v) to 40% (v/v) of said colloidal particles.

49. The method of Claim 42, wherein said photo-curable dispersion medium is a monomer comprising an acrylate group.

50. The method of Claim 42, wherein said photo-curable colloidal dispersion further comprises at least one selected from the group consisting of fluorescent substance, quantum dot, carbon black and titanium dioxide.

51. The method of Claim 42, wherein said photonic crystal flake has a size of 10 μm to 1 cm.

52. The method of Claim 42, wherein said photonic crystal flakes are produced by photo-curing, by means of a photomask, a specific portion of said photo-curable dispersion medium, with injecting said photo-curable colloidal dispersion between two parallel plates which are at intervals of 5 μm to 500 μm.

53. The method of Claim 42, wherein said photonic crystal flakes are produced by repeatedly photo-curing, by means of a photomask, a specific portion of said photo-curable dispersion medium, after injecting said photo-curable colloidal dispersion between two parallel plates which are at intervals of 5 μm to 500 μm.

54. The method of Claim 42, wherein said photonic crystal flakes are produced by photo-curing, by means of a photomask, a specific portion of said photo-curable dispersion medium, with injecting said photo-curable colloidal dispersion through a microtube with a height of 5 μm to 500 μm.

55. The method of Claim 42, wherein said photonic crystal flakes are produced by photo-curing, by means of a photomask, a specific portion of said photo-curable dispersion medium, after injecting said photo-curable colloidal dispersion through a microtube with a height of 5 μm to 500 μm.

56. The method of Claim 42, wherein said photonic crystal flakes are produced by injecting said photo-curable colloidal dispersion into grooves formed on a substrate and having a depth of 5 μm to 500 μm, and photo-curing said photo-curable colloidal suspension.

57. The method of Claim 42, wherein said photonic crystal flakes are produced by injecting said photo-curable colloidal dispersion between two parallel plates which are at intervals of 5 μm to 500 μm, and photo-curing, by means of a photomask, said photo-curable dispersion medium.

58. The method of Claim 42, wherein said photonic crystal flakes are produced by applying said photo-curable dispersion medium to a plate, and photo-curing, by means of a photomask, said photo-curable dispersion medium.

59. The method of Claim 42, wherein said photonic crystal flakes are produced by introducing said photo-curable dispersion medium as a droplet on a first plate by means of a inkjet printer or a dispenser, installing a second plate such that a distance between said first plate and said second plate is to be 5 μm to 500 μm, and photo-curing said photo-curable dispersion medium.

60. The method of Claim 42, further comprising removing said colloidal particles contained in said photonic crystal flake to obtain a porous photonic crystal flake.

61. The method of Claim 60, wherein said colloidal particles are removed by heating said photonic colloidal flake up to 100 °C to 500 °C, or treating said photonic colloidal flake with hydrofluoric acid or sodium hydroxide.

62. A method for preparing a paint composition, which comprises:

   i) photo-curing a photo-curable colloidal dispersion prepared by dispersing colloidal particles in a photo-curable dispersion medium, to obtain a photonic crystal film;
   ii) grinding said photonic crystal film to obtain photonic crystal flakes; and
   iii) dispersing said photonic crystal flakes into a solvent.

63. The method of Claim 62, wherein said colloidal particles of the step i) are selected from the group consisting of silica, titanium dioxide, polystyrene and poly(methyl methacrylate).

64. The method of Claim 62, wherein said colloidal particles of the step i) have a size of 50 nm to 100,000 nm.

65. The method of Claim 62, wherein said colloidal particles of the step i) have a size of 100 nm to 3,000 nm.

66. The method of Claim 62, wherein said colloidal particles of the step i) are a hollow type or a core-shell type.

**67.** The method of Claim 62, wherein said photo-curable dispersion medium of the step i) comprises 5% (v/v) to 70% (v/v) of said colloidal particles.

**68.** The method of Claim 62, wherein said photo-curable dispersion medium of the step i) comprises 10% (v/v) to 40% (v/v) of said colloidal particles.

**69.** The method of Claim 62, wherein said photo-curable dispersion medium of the step i) is a monomer comprising an acrylate group.

**70.** The method of Claim 62, wherein said photo-curable colloidal dispersion of the step i) further comprises at least one selected from the group consisting of fluorescent substance, quantum dot, carbon black and titanium dioxide.

**71.** The method of Claim 62, wherein said photonic crystal film of the step i) has a thickness of 5 μm to 500 μm.

**72.** The method of Claim 62, wherein said photonic crystal flakes of the step ii) has a size of 15 μm to 1 cm.

**73.** The method of Claim 62, wherein said photonic crystal film of the step i) is produced by injecting said photo-curable colloidal dispersion between two parallel plates which are at intervals of 5 μm to 500 μm, and photo-curing said photo-curable dispersion medium.

**74.** The method of Claim 73, wherein said photo-curable colloidal dispersion is introduced between said two parallel plates by reducing pressure between said two parallel plates or by pressurizing said photo-curable colloidal dispersion.

**75.** The method of Claim 62, wherein said photonic crystal film of the step i) is produced by inserting a movable plate between two fixed parallel plates which are at intervals of 5 μm to 500 μm, extracting said movable plate, with injecting said photo-curable colloidal dispersion between said fixed plate and said movable plate, to coat said movable plate with said photo-curable colloidal dispersion, and curing said coated photo-curable colloidal dispersion.

**76.** The method of Claim 62, wherein said photonic crystal film of the step i) is produced by introducing said photo-curable colloidal dispersion between two rollers which are at intervals of 5 μm to 500 μm, and photo-curing said photo-curable colloidal dispersion at a region where a distance between the two rollers is shortest.

**77.** The method of Claim 62, wherein said photonic crystal film of the step i) is produced by inserting a movable plate between two rollers which are at intervals of 5 μm to 500 μm, extracting said movable plate, with injecting said photo-curable colloidal dispersion between said two rollers and said movable plate, to coat said movable plate with said photo-curable colloidal dispersion, and curing said coated photo-curable colloidal dispersion.

**78.** The method of Claim 62, wherein said photonic crystal film of the step i) is produced by introducing said photo-curable colloidal dispersion on a plate, coating said plate with said photo-curable colloidal dispersion through moving a block which has a blade or a sloped surface and is installed 5 μm to 500 μm above said plate, and photo-curing said coated photo-curable colloidal dispersion.

**79.** The method of Claim 62, wherein said photonic crystal film of the step i) is produced by introducing said photo-curable colloidal dispersion on a rotating roller, coating said rotating roller with said photo-curable colloidal dispersion by means of a first blade which is installed 5 μm to 500 μm above said rotating roller, photo-curing said coated photo-curable colloidal dispersion, and stripping off the photo-cured photonic crystal film from said roller.

**80.** The method of Claim 62, wherein said photonic crystal film of the step i) is produced by introducing said photo-curable colloidal dispersion on a plate, rotating said plate, and photo-curing said photo-curable colloidal dispersion.

**81.** The method of Claim 62, wherein said photonic crystal flakes of the step ii) is dispersed into said solvent at a concentration of 1% (v/v) to 60% (v/v) at the step iii).

**82.** The method of Claim 62, further comprising laminating at least one photonic crystal film of the step i), of which reflected wavelength is/are different from that of said photonic crystal film.

**83.** The method of Claim 62, further comprising removing said colloidal particles contained in said photonic crystal film of the step ii) to obtain a porous photonic crystal.

84. The method of Claim 62, further comprising removing said colloidal particles contained in said photonic crystal flakes of the step iii) to obtain a porous photonic crystal.

85. The method of Claim 83 or 84, wherein said colloidal particles are removed by heating said photonic colloidal film/ flakes up to 100 °C to 500 °C, or treating said photonic colloidal film with hydrofluoric acid or sodium hydroxide.

86. A method for preparing a paint composition, which comprises:

i) photo-curing a photo-curable colloidal dispersion prepared by dispersing colloidal particles in a photo-curable dispersion medium, to obtain photonic crystal flakes; and
ii) dispersing said photonic crystal flakes into a solvent.

87. The method of Claim 86, wherein said colloidal particles of the step i) are selected from the group consisting of silica, titanium dioxide, polystyrene and poly(methyl methacrylate).

88. The method of Claim 86, wherein said colloidal particles of the step i) have a size of 50 nm to 100,000 nm.

89. The method of Claim 86, wherein said colloidal particles of the step i) have a size of 100 nm to 3,000 nm.

90. The method of Claim 86, wherein said colloidal particles of the step i) are a hollow type or a core-shell type.

91. The method of Claim 86, wherein said photo-curable dispersion medium of the step i) comprises 5% (v/v) to 70% (v/v) of said colloidal particles.

92. The method of Claim 86, wherein said photo-curable dispersion medium of the step i) comprises 10% (v/v) to 40% (v/v) of said colloidal particles.

93. The method of Claim 86, wherein said photo-curable dispersion medium of the step i) is a monomer comprising an acrylate group.

94. The method of Claim 86, wherein said photo-curable colloidal dispersion of the step i) further comprises at least one selected from the group consisting of fluorescent substance, quantum dot, carbon black and titanium dioxide.

95. The method of Claim 86, wherein said photonic crystal flakes have a size of 15 $\mu$m to 1 cm and a thickness of 5 $\mu$m to 500 $\mu$m.

96. The method of Claim 86, wherein said photonic crystal flakes of the step i) are produced by photo-curing, by means of a photomask, a specific portion of said photo-curable dispersion medium, with injecting said photo-curable colloidal dispersion between two parallel plates which are at intervals of 5 $\mu$m to 500 $\mu$m.

97. The method of Claim 86, wherein said photonic crystal flakes of the step i) are produced by repeatedly photo-curing, by means of a photomask, a specific portion of said photo-curable dispersion medium, after injecting said photo-curable colloidal dispersion between two parallel plates which are at intervals of 5 $\mu$m to 500 $\mu$m.

98. The method of Claim 86, wherein said photonic crystal flakes of the step i) are produced by photo-curing, by means of a photomask, a specific portion of said photo-curable dispersion medium, with injecting said photo-curable colloidal dispersion through a microtube with a height of 5 $\mu$m to 500 $\mu$m.

99. The method of Claim 86, wherein said photonic crystal flakes of the step i) are produced by photo-curing, by means of a photomask, a specific portion of said photo-curable dispersion medium, after injecting said photo-curable colloidal dispersion through a microtube with a height of 5 $\mu$m to 500 $\mu$m.

100.The method of Claim 86, wherein said photonic crystal flakes of the step i) are produced by injecting said photo-curable colloidal dispersion into grooves formed on a substrate and having a depth of 5 $\mu$m to 500 $\mu$m, and photo-curing said photo-curable colloidal suspension.

**101.** The method of Claim 86, wherein said photonic crystal flakes of the step i) are produced by injecting said photo-curable colloidal dispersion between two parallel plates which are at intervals of 5 $\mu$m to 500 $\mu$m, and photo-curing, by means of a photomask, said photo-curable dispersion medium.

**102.** The method of Claim 86, wherein said photonic crystal flakes of the step i) are produced by applying said photo-curable dispersion medium to a plate, and photo-curing, by means of a photomask, said photo-curable dispersion medium.

**103.** The method of Claim 86, wherein said photonic crystal flakes of the step i) are produced by introducing said photo-curable dispersion medium as a droplet on a first plate by means of a inkjet printer or a dispenser, installing a second plate such that a distance between said first plate and said second plate is to be 5 $\mu$m to 500 $\mu$m, and photo-curing said photo-curable dispersion medium.

**104.** The method of Claim 86, wherein said photonic crystal flakes of the step i) is dispersed into said solvent at a concentration of 1% (v/v) to 60% (v/v) at the step ii).

**105.** The method of Claim 86, further comprising removing said colloidal particles contained in said photonic crystal flakes of the step i) to obtain a porous photonic crystal.

**106.** The method of Claim 105, wherein said colloidal particles are removed by heating said photonic colloidal flakes up to 100 °C to 500 °C, or treating said photonic colloidal film with hydrofluoric acid or sodium hydroxide.

Figure 1.

Figure 2.

Figure 3.

Figure 4.

Figure 5.

Figure 6.

Figure 7.

Figure 8.

Figure 9.

Figure 10.

Figure 11.

Figure 12.

Figure 13.

Figure 14.

Figure 15.

Figure 16.

Figure 17.

Figure 18.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050095471 A

- KR 100717923

**Non-patent literature cited in the description**

- **P. Jiang ; J. F. Bertone ; K. S. Hwang ; V. L. Colvin.** Single-Crystal Colloidal Multilayers of Controlled Thickness. *Chemistry of Materials,* 1999, vol. 11, 2132-2140

- *Journal of American Chemical Society,* 2006, vol. 126, 13778-13786
- *Journal of the American Chemical Society,* 2006, vol. 128, 10897-10904
- *Advanced Materials,* 2008, vol. 20, 1649-1655